Europäisches Patentamt

European Patent Office

Office européen des brevets

(11) Publication number: **0 101 907**

**B1**

(12) **EUROPEAN PATENT SPECIFICATION**

(45) Date of publication of patent specification: **15.07.87**

(51) Int. Cl.⁴: **B 01 D 11/02**

(21) Application number: **83107198.0**

(22) Date of filing: **22.07.83**

(54) Countercurrent washing tower and countercurrent washing method using same.

(30) Priority: **03.08.82 JP 134708/82**

(43) Date of publication of application:
**07.03.84 Bulletin 84/10**

(45) Publication of the grant of the patent:
**15.07.87 Bulletin 87/29**

(84) Designated Contracting States:
**DE GB IT NL**

(56) References cited:
**DE-B-2 214 826**
**US-A-3 454 545**
**US-H- 492 716**

(73) Proprietor: **MITSUI TOATSU CHEMICALS,
INCORPORATED
2-5 Kasumigaseki 3-chome
Chiyoda-Ku Tokyo 100 (JP)**

(72) Inventor: **Ooka, Tatuo
2-47-21, Koumyoudai
Izumi Osaka-fu (JP)**
Inventor: **Funakoshi, Yoshiyuki
3-9-125, Nishi-toriishi
Takaishi Osaka-fu (JP)**
Inventor: **Uchikawa, Nobutaka
6-3-2, Higashi-hagoromo
Takaishi Osaka-fu (JP)**

(74) Representative: **Schüler, Horst, Dr.
Kaiserstrasse 41
D-6000 Frankfurt/Main 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

0 101 907

## Description

Background of the invention
1. Field of the invention

This invention relates to a countercurrent washing tower for washing a slurry, and particularly to a countercurrent washing tower for washing a great deal of slurry efficiently with a liquid without need for any mixing means. This invention also relates to a method for washing a slurry of a synthetic resin by using the above countercurrent washing tower.

2. Description of the prior art

When washing a solid with a liquid, the washing efficiency may generally be improved by mixing the solid and liquid vigorously. However, the mixing operation in such a solid-liquid washing work involves many technical problems or inconveniences in addition to the requirement for a mixing apparatus having a complex structure, including (1) the consumption of a large amount of power for mixing a liquid, especially a slurry; (2) the need for liquid-tight and gas-tight sealing when providing a washing tower with a mixing apparatus; and (3) the absolute necessity for such liquid-tight and gas-tight sealing for safety reasons where a combustible substance is handled.

There has accordingly been a longstanding desire for the development of a technique which permits washing a large amount of slurry stably, with high efficiency by means of a relatively simple apparatus without any mixing means. Countercurrent washing towers equipped with no mixing means *per se* have already been known, as disclosed, for example, in Japanese Patent Publication No. 42379/1972. Such washing towers were able to conduct highly efficient washing and/or purification provided that their horizontal cross-sectional areas were relatively small. However, it was very difficult to achieve a washing and/or purification operation stably and with high efficiency where such washing towers were large in dimension.

This big difference in effect between such large countercurrent washing towers and small countercurrent washing towers may perhaps be attributed to the following reasons: In a countercurrent washing tower, a solid which has been introduced into the tower for washing moves downward from an upper part of the tower to a lower part thereof while brought into countercurrent contact with a washing liquid introduced from the lower part of the tower. This permits washing or extracting the solid with the washing liquid so that the thus-washed or extracted solid can be removed from the bottom of the tower. When the size of the countercurrent washing tower becomes greater, the slurry introduced from the upper part of the tower tends to become uneven and the washing liquid, which has been introduced upward from the lower part of the tower, is susceptible of flowing as a turbulent flow, thereby causing the solid and liquid to move up and down. As a result, a large portion of the solid is discharged together with a portion of the extracting or washing liquid from the lower part of the tower and the remaining portion of the extracting or washing liquid is discharged together with the remaining portion of the solid from the upper part of the tower, leading to a reduction in washing or extracting efficiency.

In DE—A—2 214 826 a countercurrent washing tower for dissolving substances out of suspensions or slurries is described which comprises a nozzle opening in an upper part of the tower for feeding the slurry, a dispersing member disposed underneath the nozzle and ending at the beginning of a narrow leg section of the washing tower, said leg section being disposed upright below the dispersing member, a washing liquid feeding line connected with dispersing means disposed in a lower end part of the leg section, a lower discharge opening formed through the wall of the washing tower at a bottom location thereof for removal of washed slurry, and an upper discharge opening formed through the wall of the washing tower at an upper location thereof for withdrawal of spent washing liquid, thereby bringing a slurry, a suspension or the like from the nozzle into countercurrent contact with the washing liquid fed from the bottom part, so that the slurry, the suspension or the like is washed with the washing liquid, while the continuously fed suspension or slurry is held suspended by the upwardly flowing washing liquid in a kind of fluidized bed. Also in this prior art tower occurrence of turbulent flow as well as chanelling due to inhomogeneous flow cannot be avoided in all cases. It is, however, desirable to contact the slurry and the washing liquid as intimately and uniform as possible.

Summary of the invention

An object of this invention is to provide an improved countercurrent washing tower useful for washing a slurry without need for any mixing means, which can wash a large volume of slurry efficiently.

A further object of this invention is to provide a method for washing a large volume of slurry of a synthetic resin with high efficiency by using such a washing tower.

In one aspect of this invention, there is thus provided a countercurrent washing tower which comprises:

a slurry-charging nozzle opening in an upper part of the tower;

a slurry-dispersing member disposed underneath the slurry-charging nozzle and having a projected top area wider than the area of the opening of the slurry-charging nozzle;

a leg section of the washing tower, said leg section being disposed upright below the slurry-dispersing member;

2

a plurality of washing liquid feeding nozzles disposed in a lower end part of the leg section, each nozzle having a small opening;

a lower discharge opening formed through the wall of the washing tower at a bottom location thereof for removal of washed slurry; and

an upper discharge opening formed through the wall of the washing tower at an upper location thereof for withdrawal of spent washing liquid;

thereby bringing the slurry from the slurry-charging nozzle into countercurrent contact with the washing liquid from the washing liquid feeding nozzles, both as macroscopically laminar flows, so that the slurry is washed with the washing liquid.

In another aspect of this invention, there is also provided a method for washing a slurry of a synthetic resin countercurrently with a washing liquid, which method comprises:

charging, into a countercurrent washing tower as described above, the slurry through the slurry-charging nozzle at a flow velocity of 0.5 m/sec. or slower as measured at the opening of the slurry-charging nozzle; and

feeding, into the leg section of the countercurrent washing tower, the washing liquid from the washing liquid feeding nozzles at such a flow velocity that formation of turbulence is avoided in the leg section of the washing tower, thereby forming a stable slurry/spent washing liquid interface in an upper part of the washing tower so that the slurry is washing countercurrently with the washing liquid;

discharging the washed slurry through a lower discharge opening at a lower location of the washing tower; and

discharging the spent washing liquid through an upper discharge opening at an upper location of the washing tower.

Brief description of the drawings

In the drawings:

Figure 1 is a schematic illustration of a countercurrent washing tower according to one embodiment of this invention;

Figure 2 is simplified, schematic, plan view showing one example of arrangement of washing liquid feeding nozzles in the countercurrent washing tower according to this invention;

Figure 3 is an enlarged, vertical, cross-sectional view illustrating one example of the washing liquid feeding nozzle; and

Figure 4 is a plan view showing washing liquid feeding nozzles arranged in a ring-like configuration, which were used in Comparative Example 2.

Detailed description of the invention

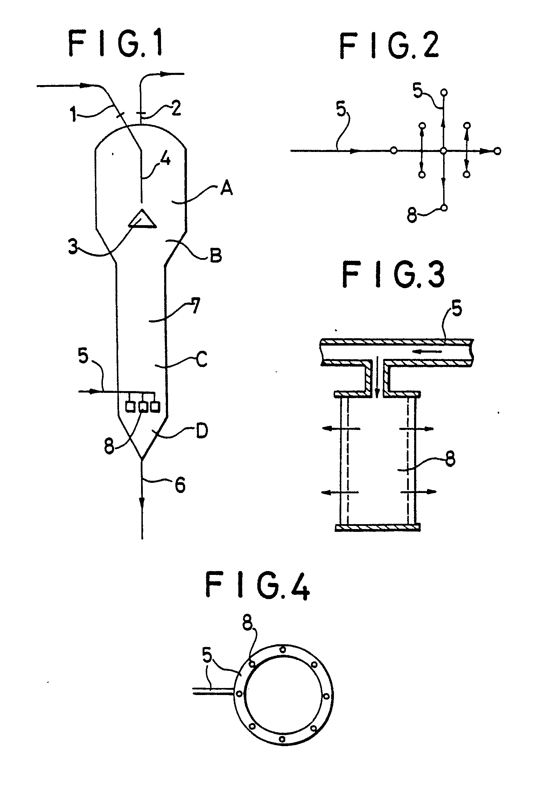

The countercurrent washing tower according to this invention (hereinafter called "the tower") will now be described with reference to the accompanying drawings. The tower is closed except for inlets for a material to be treated and a washing liquid and outlets for the treated material and the spent washing liquid. This hermetic sealing of the tower must be ensured particularly carefully where a combustible substance is handled. In Figure 1, a slurry-charging nozzle 4 is provided in an upper part of the tower, for example, in the central upper part of the tower. The nozzle 4 opens for example, downward. The nozzle 4 is provided in the above-described manner in order to charge a slurry into the tower as smoothly as possible with a view toward avoiding development of turbulence. It is desirable for the smooth charging of the slurry into the tower to make the diameter of the nozzle as great as possible. However, an excessively large nozzle diameter impedes the upward flow of the spent washing liquid, thereby causing a turbulent flow to occur and preventing the formation of a stable slurry/spent washing liquid interface and thus making it difficult to bring about the effects of this invention.

One slurry-charging nozzle is generally provided but a plurality of slurry-charging nozzles may be provided in the upper part of the tower, preferably by arranging them as a unit in the central upper part of the tower.

Underneath the nozzle 4, a slurry-dispersing member 3 is disposed. The slurry-dispersing member 3 is provided in order to hinder the movement of the slurry, which has been charged into the tower through the nozzle 4 and is about to undergo a free downward falling flow, so that the slurry will be dispersed as evenly as possible and allowed to flow downward through the tower. For this purpose, it is necessary to have the dispersing member extended underneath the opening of the nozzle 4 and greater in size than the opening of the nozzle 4. Accordingly, it is required to dispose the dispersing member 3 underneath the nozzle 4 and to make the projected top area of the dispersing member 3 wider than the area of the opening of the nozzle 4.

The slurry-dispersing member has a conical configuration with its apex confronting the nozzle 4.

Taking the whole liquid stream into consideration, it is certainly desirable to make the nozzle 4 as wide in diameter as possible. This means that the slurry-dispersing member 3 has a wide area. However, an excessively wide area of the slurry-dispersing member makes the spacing between the slurry-dispersing member and the wall of the tower narrower and induces more violent impact between the slurry and the washing liquid which pass downward and upward, respectively, through the spacing, thereby tending to develop turbulence. Taking both the downward flow of the slurry and the upward flow of the washing liquid into consideration, it is thus necessary to make the area of the spacing sufficiently broad, and more specifically, to make the area of the spacing wider than at least the horizontal cross-sectional area of the leg section of the washing tower.

The object of this invention can still be achieved even if the opening of the nozzle 4, through which the slurry is introduced, is located adjacent to the top of the washing tower. If the opening of the nozzle 4 is made somewhat apart from the top of the washing tower to provide a small space between the opening and the top, a stable slurry/spent washing liquid interface is formed below the opening of the nozzle 4. At the above-mentioned interface, the slurry and the spent washing liquid are separated from each other. Thus, the interface-forming part serves as a separation zone for the slurry and the spent washing liquid. Formation of such a zone is preferable because it also contributes to the attainment of the effects of this invention.

Below the slurry-dispersing member, there is provided an upright leg section 7 (a washing/separation zone C) of the washing tower. Above the leg section 7, there are provided in order, a sedimentation/separation zone A which is the upper portion of the tower, and a connecting zone B. The slurry, which has been dispersed evenly, is brought into countercurrent contact with the upward-flowing washing liquid in these zones while smoothly and freely flowing downward through the zones, thereby carrying out the washing of the slurry.

In a lower end part of the leg section 7 of the washing tower, there are provided a plurality of nozzles 8, each of which has a small opening for feeding the washing liquid into the washing tower. These nozzles 8 are provided to feed the washing liquid in such a manner that the washing liquid flows upward through the washing tower. In order to avoid the occurrence of turbulence in the washinng tower, the openings of the nozzles 8 are not directed upward but are deliberately formed in a direction between the horizontal and the downward.

A discharge opening 6 is formed for the washed slurry through the wall of the washing tower at a lower bottom location (i.e., an inverted conical part D) of the washing tower, through which discharge opening 6 the naturally-settled, washed slurry is discharged. Accordingly, it is desirable for the prevention of turbulence in liquid flows within the washing tower to set the vertical positional relationship between the nozzle 8 and the discharge opening 6 in such a way that the former is located upward of the latter.

The nozzle 8, which is adapted to feed the washing liquid into the washing tower, contributes to the stabilization of the liquid flows within the washing tower, because its openings are formed as described above. At each of the openings of the nozzles 8, a plurality of slits may be provided. Alternatively, straightening means such as a sintered grid, a piece of cloth, or a screen may be provided at each of the openings of the nozzles 8.

Due to the adoption of the above-described specific structure in the washing tower according to this invention, the tower of this invention is capable of carrying out the washing of a large volume of slurry with stable and high efficiency under macroscopic laminar conditions although it does not employ any mixing means and the washing itself is mere countercurrent washing.

It should, however, be borne in mind that actual flow velocities of the slurry and washing liquid may vary considerably depending on the physical properties of the solid material and liquid which make up the slurry to be washed, as well as the physical properties of the washing liquid and have optimum values under specific conditions.

The washing tower according to this invention can be used extensively for washing slurries. One example of an application of this tower will be described below, in which it is applied to wash a slurry of a synthetic resin.

A synthetic resin has a specific gravity similar to that of a washing liquid which may be water or an organic solvent. Solid particles of such a synthetic resin thus tend to readily move in a suspension. Therefore, it is extremely difficult to countercurrently wash such a synthetic resin in a large volume. Reference is now made to Figure 1, using a polypropylene slurry as the slurry of the synthetic resin.

Production of polypropylene may certainly be carried out in a solvent but the bulk polymerizatior method has recently been employed in many instances for various reasons. Whenever bulk polymerization is employed, the washing of the resulting polymerization slurry becomes more important for the following reasons: A polymerization slurry obtained in accordance with the bulk polymerization method has such a big advantage that, compared with a polymerization slurry obtained in accordance with the conventional suspension (or solvent) polymerization method—hereinafter abbreviated as "the conventional solvent polymerization method"—in which the polymerization is carried out using a saturated liquid hydrocarbon generally having a carbon number of 5 or more or desirably 5—7 as a solvent, the resultant polymer can be very easily separated from the solvent by virtue of the simple step of depressurizing the polymerization slurry because unsaturated hydrocarbon monomers (propylene, principally) used as the polymerization solvent have high vapor pressures and are thus susceptible to evaporating. On the other hand, a polymer obtained in accordance with the bulk polymerization method is accompanied by such drawbacks that it contains, first of all, polymers soluble in boiling n-heptane and secondly, catalyst residue in high concentrations.

The physical properties of a polymer containing such boiling n-heptane-soluble polymers in high concentrations are poor, especially in stiffness, yield stress and the like. Accordingly, characteristic

**0 101 907**

properties of polypropylene are lowered so much that it cannot be used particularly in applications requiring relatively high physical properties such as films or fibers.

Use of the bulk polymerization method permits by itself reducing the amount of the catalyst residue, which has been referred to as the second drawback of a polymer obtained in accordance with the bulk polymerization method, because the polymerization velocity is generally faster compared with the conventional solvent polymerization and because the polymerization can be carried out under conditions suitable for efficiency of the catalyst. Under these circumstances, even such a polymer as obtained by the bulk polymerization method cannot, however, be used directly in applications requiring high quality since its heat resistance and hue are poor. For this reason, it is the practice to remove the above-mentioned boiling n-heptane-soluble polymers and catalyst residue from each resultant propylene polymer or copolymer in various ways.

Such a polypropylene slurry is charged in accordance with the washing method according to this invention, into the washing tower through the nozzle 4. The slurry-dispersing member 3 disposed underneath the nozzle 4, disperses the slurry evenly throughout the tower and reduces the flow velocity of the slurry introduced through the nozzle 4, thereby forming a stable interface between the slurry and the spent washing liquid and preventing the slurry from being turbulated in the leg section 7 of the washing tower.

The flow velocity of the thus-charged slurry is closely correlated with the state of the interface and the turbulence of the slurry in the leg section 7 of the washing tower. Since the washing effect for the polypropylene is considerably lowered if the flow velocity is too fast, the charging flow velocity of the slurry must be 0.5 m/sec or slower, or preferably 0.1 m/sec or slower. It is an essential requirement for the attainment of the effects of this invention to limit the charging flow velocity of the slurry to 0.5 m/sec or slower. The washing efficiency is improved as the charging flow velocity of the slurry becomes slower.

The diameter of the slurry-dispersing member 3 has a remarkable effect on the elimination of dynamic pressures in the slurry. The effect of the slurry-dispersing member 3 becomes greater as its diameter becomes larger. However, the diameter of the slurry-dispersing member 3 should not be enlarged too much since any excessively large diameters make the average upward flow velocity of the washing liquid at the annular cross-sectional area between the dispersing member and the inner wall of the countercurrent washing tower faster than the average upward flow velocity of the washing liquid at the horizontal cross-sectional plane in the washing zone C, impair the settling of fine polypropylene particles and facilitate the occurrence of turbulence. The diameter of the slurry-dispersing member 3 may be 0.1—1.5 times or preferably 0.5—1.0 times the diameter of the leg section 7 of the countercurrent washing tower.

The washing liquid, which consists principally of propylene, is introduced at a lower part through a feed line 5. It is introduced through openings of nozzles 8 in order to facilitate its dispersion. It is desirable for each of the openings to have a sintered grid, a piece of cloth or a screen such as a wire mesh, or to be slit-like. The flow velocity of the washing propylene fed through the nozzles 8 is closely correlated with the stability of the interface formed between the slurry and the spent washing liquid in the upper part of the washing tower and the extent of turbulence of the slurry in the washing zone C. Since the washing efficiency is reduced if the flow velocity is too fast, it is desirable to limit the charging velocity of the washing liquid to 0.2 m/sec or slower or, preferably 0.05 m/sec or slower. In addition, the volume of unrecovered slurry is increased unless the charging velocity of the washing liquid is set under such conditions that the upward flow velocity of the washing liquid in the washing tower permits formation of an interface between the slurry and the washing liquid in the washing tower.

A slurry of a synthetic resin, such as a polypropylene slurry, can be countercurrently washed in large volume with good washing efficiency and high percentage recovery of the synthetic resin by using the washing tower according to this invention and operating it under such operation conditions as described above.

The effects of this invention will hereinafter be described specifically in the following Referential Example, Examples and Comparative Examples:

Reference Example
(Preparation of polypropylene slurry)
A vibrating mill equipped with a grinding pot having an internal volume of 700 liters and containing 2300 kg of steel balls each of 12 mm in diameter was provided. The pot was charged, in a nitrogen gas atmosphere, with 60 kg of magnesium chloride, 12 liters of tetraethoxysilane and 9 liters of 1,2-dichloroethane. The contents of the pot were ground for 40 hours. Thirty-six kilograms of the ground mixture and 240 liters of titanium tetrachloride were charged in a thoroughly dried mixing tank having an internal volume of 600 liters, under a nitrogen gas atmosphere. The contents were mixed at 80°C for 120 minutes and then allowed to stand. The resulting supernatant was removed. Then, 420 liters of n-heptane were added and the resultant mixture was agitated at 80°C for 15 minutes and thereafter allowed to stand. The resulting supernatant was removed. This washing procedure was repeated 7 times and 240 liters of n-heptane were added to form a slurry of a solid catalyst. A portion of the solid catalyst slurry was sampled and n-heptane was evaporated from the slurry. The residue was then subjected to an analysis. This analysis indicated that the solid catalyst contained 1.62 wt.% of Ti. Four thousand kilograms of propylene were

5

charged into a polymerization apparatus equipped with a jacket and having an internal volume of 20 m³, which had in advance been dried sufficiently, purged with nitrogen gas and then with propylene. Separately, twenty-two liters of n-heptane, 1056 ml of diethylaluminum chloride, 616 mol of methyl o-toluylate and 220 g of the above-prepared solid catalyst were charged in a small autoclave having an internal volume of 30 liters. The contents were mixed at room temperature for 1 minute, followed by the addition of 220 ml of triethyl aluminum. The resulting mixture was charged under pressure into the above polymerization apparatus with an internal volume of 20 m³. Thereafter, 9.00 Nm³ of hydrogen gas were charged into the reaction apparatus and the internal temperature of the reaction apparatus was raised to 75°C by causing warm water to flow through the jacket. The polymerization was continued while maintaining the reaction apparatus at 75°C and feeding hydrogen gas into the polymerization apparatus so as to keep the hydrogen gas concentration at the same level. On the other hand, a solution containing 660 ml of triethyl aluminum dissolved in 12540 ml of n-heptane was continuously fed under pressure and at 110 ml/min into an autoclave and liquid propylene was also charged at 27.5 kg/min into the same autoclave, thereby conducting the polymerization of polypropylene for 2 hours. Thereafter, 16.5 kg of diethylene glycol monoisopropyl ether was charged to terminate the polymerization. Then, the contents were agitated into a slurry of 3300 kg/polypropylene/4000 kg-propylene.

Example 1

The washing of the polypropylene slurry was effected using a countercurrent washing tower of the type shown in Figure 1. The dimensions of the countercurrent washing tower were as follows:

| | |
|---|---|
| Inner diameter of the washing zone C: | 80 cm |
| Length of the washing zone C: | 500 cm |
| Inner diameter of the slurry sedimentation separation zone A: | 120 cm |
| Length of the slurry sedimentation/ separation zone A: | 200 cm |
| Height of the bottom part D: | 100 cm |
| Height of the connecting zone B between the upper sedimentation/separation zone A and the washing/separation zone C: | 70 cm |
| Diameter of the bottom face of the conical slurry-dispersing member 3 disposed underneath the slurry-charging nozzle 3: | 60 cm |
| Diameter (at the position indicated by numeral 1) of the line for charging the polypropylene slurry to be washed: | 2,54 cm |
| Diameter of the nozzle 4: | 15,24 cm |

The washing propylene was introduced through the line 5 into the countercurrent washing tower. It was fed into the tower through 9 cylindrical nozzles 8 of a sintered metal as illustrated in Figure 2, in order to facilitate the dispersion of the washing liquid. Each of the nozzles 8 has such a structure as shown in Figure 3. The washed slurry was removed through the discharge opening 6. The spent washing liquid was withdrawn through the discharge opening 2 and delivered to a point outside the system. Using the above toner, the slurry obtained in the Referential Example was fed through the feed line 1 at 1880 kg/hr (850 kg/hr as polypropylene) and charged at a flow velocity of 0.06 m/sec into the tower through the nozzle 4. At the same time, washing propylene was supplied through the line 5 at 2900 kg/hr and introduced at a flow velocity of 0.01 m/sec into the tower through the nozzles 8. On the other hand, washed slurry was removed at 1880 kg/hr from the slurry discharge opening 6 while spent propylene was withdrawn at 2900 kg/hr through the upper discharge opening 2 for the washing liquid. The washing operation was continued for 2 hours while controlling the introduction of the slurry and propylene and the removal of the washed slurry and spent propylene at the above-described levels. The following analyses were made of the powder obtained by drying the slurry obtained in Referential Example, the supernatant withdrawn by stopping the mixing of the autoclave in Referential Example and the powder obtained by drying the washed slurry to determine the washing efficiency:

Analyzed were the intrinsic viscosity (hereinafter abbreviated as "η") of the powder obtained by drying the slurry obtained in Referential Example, the percentage remainder of the polymer after being extracted with the boiling n-heptane (calculated as

6

**0 101 907**

$$\frac{\text{polymer after extraction}}{\text{polymer before extraction}} \times 100\%;$$

hereinafter abbreviated as "II"), Al, Mg and methyl p-toluylate.

The mixing of the autoclave was stopped and the supernatant was taken out of the autoclave in the Referential Example. Non-volatile components (dissolved polymer+dissolved ash), Al, Mg and methyl p-toluylate present in the supernatant were analyzed. In addition, II, $\eta$, Al, Mg and methyl p-toluylate were also analyzed in the powder obtained by drying the washed slurry. Results are shown in Table 1.

Based on the analysis data of Al and Mg present in the powder and those of Al, Mg and the non-volatile components present in the supernatant, the percentage of Al dissolved in propylene to the whole Al, was calculated on the basis of Table 1 by the following equation,

$$\frac{1.00 \times 4000}{1.28 \times \dfrac{3300}{7300} \times 7300} \times 100 = 95.3 \ (\%)$$

Similarly, the percentage of Mg dissolved in propylene to the whole Mg was calculated as follows:

$$\frac{0.851 \times 4000}{1.32 \times \dfrac{3300}{7300} \times 7300} \times 100 = 78.2 \ (\%)$$

The supernatant was dried to determine the weight of polypropylene dissolved therein. The dissolved polypropylene was found to account for 1.4% of the whole polymer. Supposing that methyl p-toluylate adhered in its entirety to undissolved polypropylene present in the polymerization apparatus, the concentration of the thus-adhered methyl p-toluylate was calculated by the following equation:

$$\frac{0.616 \times 1.058}{3300} \times 10^6 = 197 \ \text{ppm}$$

Based on the analysis data of the purified polypropylene, the percentage remainders of the dissolved portions in the purified polymer were calculated as follows:

$$\text{Al:} \frac{0.076 - 1.28 \times (1 - 0.953)}{1.28 \times 0.953} \times 100 = 1.3 \ (\%)$$

$$\text{Mg:} \frac{0.313 - 1.34 \times (1 - 0.782)}{1.34 \times 0.782} \times 100 = 2.0 \ (\%)$$

$$\text{Methyl p-toluylate:} \frac{197 - 2.9}{197} \times 100 = 1.5 \ (\%)$$

Dissolved polymer:

$$\left( 1 - \frac{1 - \dfrac{0.965}{0.979}}{0.014} \right) \times 100 = -2.0 \ (\%)$$

Therefore, the purification efficiency is 98.7% in terms of Al, 98.0% in terms of Mg, 98.5% in terms of methyl p-toluylate and 100% in terms of dissolved polypropylene. On average, the purification efficiency is accordingly 98.8%.

In order to determine the percentage recovery of polypropylene, the amounts of polypropylene and catalyst residue, which were discharged together with the spent propylene, were determined by evaporating the spent propylene to dryness. As a result, the percentage recovery of polypropylene was found to be 98.4%.

7

0 101 907

TABLE 1

| Analyzed item | Intrinsic viscosity | II (%) | Al (g) powder (g) ×10⁴ | Mg (g) powder (g) ×10⁴ | Amount of methyl toluylate adhered (ppm) | Non-volatiles (g) liquid (g) ×10⁴ | Al (g) liquid (g) ×10⁴ | Mg (g) liquid (g) ×10⁴ |
|---|---|---|---|---|---|---|---|---|
| Powder obtained by drying the slurry of Referential Example | 1.60 | 96.5 | 1.28 | 1.32 | 197* | — | — | — |
| Supernatant of Referential Example | — | — | — | — | — | 1.16 | 1.00 | 0.851 |
| Purified powder obtained in Example 1 | 1.62 | 97.9 | 0.076 | 0.313 | 2.9 | — | — | — |

*Methyl p-toluylate was assumed to have adhered in its entirety to undissolved polypropylene.

**0 101 907**

Comparative Example 1

An experiment was carried out in exactly the same manner as in Example 1 except that the diameter of the nozzle 4 for introducing polypropylene, which was to be washed, into the countercurrent washing tower was made smaller so as to change the charging flow velocity of the slurry to 1.5 m/sec. Washing efficiency determined on the basis of analyses of Al and methyl toluylate in the same manner as in Example 1 and the amount of residue discharged together with the spent washing propylene and determined by evaporating the spent washing propylene are shown in Table 2. The washing efficiency and recovery of polypropylene were both lowered compared with Example 1.

Comparative Example 2

An experiment was carried out in exactly the same manner as in Example 1 except that the nozzles 8, which were adapted to introduce the washing propylene into the countercurrent washing tower, were arranged in a ring-shaped pattern as shown in Figure 4 and that the washing propylene was introduced at an average flow velocity of 1.5 m/sec through the 8 openings into the countercurrent washing tower. Results of analyses, which were conducted in the same manner as in Comparative Example 1, are also shown in Table 2.

Compared with Example 1, the washing efficiency was lowered and the percentage recovery of polypropylene was somewhat lowered.

Comparative Example 3

An experiment was carried out in exactly the same manner as in Example 1 except that the slurry-dispersing member was removed from the countercurrent washing tower. Results of analyses, which were obtained in the same manner as in Comparative Example 1, are given in Table 2. Compared with Example 1, the washing efficiency was lowered to a great extent and the percentage recovery of polypropylene was also lowered significantly.

Comparative Example 4

An experiment was carried out in exactly the same manner as in Example 1 except that the bottom diameter of the slurry-dispersing member was reduced to one-third of the bottom diameter of the slurry-dispersing member used in Example 1. Results of analyses, which were conducted in the same manner as in Comparative Example 1, are shown in Table 2. Compared with Example 1, the washing efficiency and percentage recovery of polypropylene were both lowered.

9

TABLE 2

| (Comparative) Example | Analyzed item | Washing efficiency determined on the basis of analytical data of Al (%) | Washing efficiency determined on the basis of analytical data of methyl p-toluylate (%) | Percentage recovery of polypropylene (%) |
|---|---|---|---|---|
| Example 1 | — | 98.7 | 98.5 | 98.4 |
| Comparative Example 1 | Charging flow velocity of slurry as measured at the nozzle: 1.5 m/sec | 89.5 | 90.7 | 96.5 |
| Comparative Example 2 | Charging flow velocity of washing propylene: 1.5 m/sec | 79.2 | 77.6 | 97.7 |
| Comparative Example 3 | Without the conical slurry-dispersing member | 25.5 | 31.2 | 94.3 |
| Comparative Example 4 | Bottom diameter of the conical member: 1/3 of that in Ex. 1 | 95.2 | 94.8 | 97.3 |

# 0 101 907

**Claims**

1. A countercurrent washing tower comprising

a slurry-charging nozzle (4) opening in an upper part of the tower;

a slurry-dispersing member (3) disposed underneath the slurry-charging nozzle and having a projected upper area wider than the area of the opening of the slurry-charging nozzle and a conical configuration with the apex confronting the slurry charging nozzle;

a leg section (7) of the washing tower, said leg section being disposed upright below the slurry-dispersing member (3);

a washing liquid feeding nozzle (8) disposed in a lower end part of the leg section (7) and defining a plurality of small openings;

a lower discharge opening (6) formed through the wall of the washing tower at a bottom location thereof for removal of washed slurry; and

an upper discharge opening (2) formed through the wall of the washing tower at an upper location thereof for withdrawal of spent washing liquid, characterized in that the horizontal cross-sectional area of the leg section (7) of the washing tower is smaller than the difference between the horizontal cross-sectional area of the washing tower at the location where the slurry-dispersing member (3) is disposed and the projected upper area of the slurry-dispersing member, and that the openings of the washing liquid feeding nozzle (8) are formed in a direction between the horizontal direction and the downward direction.

2. The countercurrent washing tower as claimed in Claim 1, wherein the slurry-charging nozzle (4) is disposed with its opening downwardly apart from the top of the washing tower so as to form a stable slurry/spent washing liquid interface-forming region in an upper part of the washing tower.

3. The countercurrent washing tower as claimed in Claim 1, wherein a plurality of slits are provided at the opening of each washing liquid feeding nozzle (8).

4. The countercurrent washing tower as claimed in Claim 1, wherein a sintered grid, a piece of cloth or a screen is applied to the opening of each washing liquid feeding nozzle (8).

5. The countercurrent washing tower as claimed in Claim 1, wherein the openings of the washing liquid feeding nozzles (8) are located upward of the lower discharge opening (6) for removal of washed slurry.

6. A method for washing a slurry of a synthetic resin countercurrently with a washing liquid, which method comprises:

charging, into a countercurrent washing tower as claimed in any one of Claims 1 to 5, the slurry through the slurry-charging nozzle at a flow velocity of 0.5 m/sec or slower as measured at the opening of the slurry-charging nozzle;

feeding, into the leg section of the countercurrent washing tower, the washing liquid from the washing liquid feeding nozzles at such a flow velocity that formation of turbulence is avoided in the leg section of the washing tower, thereby forming a stable slurry/spent washing liquid interface in an upper part of the washing tower so that the slurry is washed countercurrently with the washing liquid;

discharging the washed slurry through a lower discharge opening at a lower location of the washing tower; and

discharging the spent washing liquid through an upper discharge opening at an upper location of the washing tower.

7. The method as claimed in Claim 6, wherein the slurry is charged at a flow velocity of 0.1 m/sec or slower as measured at the openings of the slurry-feeding nozzles.

8. The method as claimed in Claim 6, wherein the washing liquid is fed at a flow velocity of 0.2 m/sec or slower as measured at the openings of the washing liquid feeding nozzles.

9. The method as claimed in Claim 8, wherein the washing liquid is fed at a flow velocity of 0.05 m/sec or slower as measured at the openings of the washing liquid feeding nozzles.

**Patentansprüche**

1. Gegenstromwaschkolonne, die eine Schlammzuführdüse (4), die sich in einem oberen Teil der Kolonne öffnet;

ein Schlammverteilungselement (3), das unterhalb der Schlammzuführdüse angeordnet ist und eine obere Projektionsfläche, die breiter als die Fläche der Öffnung der Schlammzuführdüse ist, und eine konische Konfiguration, bei der die Spitze auf die Schlammzuführdüse gerichtet ist, aufweist;

einen Rieselabschnitt (7) der Waschkolonne, wobei dieser Rieselabschnitt senkrecht unter dem Schlammverteilungselement (3) angeordnet ist;

eine Waschflüssigkeitszuführungsdüse (8), die in einem unteren Endteil des Rieselabschnittes (7) angeordnet ist und eine Vielzahl kleiner Öffnungen begrenzt;

eine untere Ablaßöffnung (6), die durch die Wand der Waschkolonne an einem Bodenabschnitt derselben hindurchreichend zum Ablassen von gewaschenem Schlamm ausgebildet ist, und

eine obere Ablaßöffnung (2), die durch die Wand der Waschkolonne an juner oberen Stelle derselben hindurchreichend zum Abziehen verbrauchter Waschflüssigkeit ausgebildet ist, umfaßt, dadurch gekennzeichnet, daß die horizontale Querschnittsfläche des Rieselabschnitts (7) der Waschkolonne kleiner

11

als die Differenz zwischen der horizontalen Querschnittsfläche der Waschkolonne an der Stelle, an der das Schlammverteilungselement (3) angeordnet ist, und der oberen Projektionsfläche des Schlammverteilungselementes ist und daß die Öffnungen der Waschflüssigkeitszuführungsdüse (8) in einer Richtung zwischen der horizontalen Richtung und der Richtung nach unten ausgebildet sind.

2. Gegenstromwaschkolonne nach Anspruch 1, bei der die Schlammzuführdüse (4) so mit ihrer Öffnung abseits von dem oberen Teil der Waschkolonne nach unten gerichtet angeordnet ist, daß ein eine stabile Schlamm-/verbrauchte Waschflüssigkeits-Zwischenschicht bildender Bereich in einem oberen Teil der Waschkolonne ausgebildet wird.

3. Gegenstromwaschkolonne nach Anspruch 1, bei der eine Vielzahl von Schlitzen an der Öffnung jeder einzelnen Waschflüssigkeitszuführungsdüse (8) vorgesehen ist.

4. Gegenstromwaschkolonne nach Anspruch 1, bei der ein gesintertes Gitter, ein Stück Gewebe oder ein Sieb an der Öffnung jeder einzelnen Waschflüssigkeitszuführungsdüse (8) angebracht ist.

5. Gegenstromwaschkolonne nach Anspruch 1, bei der die Öffnungen der Waschflüssigkeitszuführungsdüsen (8) oberhalb der unteren Ablaßöffnung (6) zum Ablassen des gewaschenen Schlammes gelegen sind.

6. Verfahren zum Waschen eines Schlammes aus einem Kunstharz im Gegenstrom mit einer Waschflüssigkeit, das folgendes umfaßt:

Einleiten des Schlammes durch die Schlammzuführdüse in eine Gegenstromwaschkolonne, wie sie in einem der Ansprüche 1 bis 5 beansprucht ist, mit einer Strömungsgeschwindigkeit von 0,5 m/s oder langsamer, gemessen an der Öffnung der Schlammzuführdüse;

Zuführen der Waschflüssigkeit von den Waschflüssigkeitszuführungsdüsen in den Rieselabschnitt der Gegenstromwaschkolonne mit solch einer Strömungsgeschwindigkeit, daß die Bildung von Turbulenz in dem Rieselabschnitt der Waschkolonne vermieden wird, um dadurch eine stabile Schlamm-/verbrauchte Waschflüssigkeits-Zwischenschicht in einem oberen Teil der Waschkolonne zu bilden, so daß der Schlamm im Gegenstrom mit der Waschflüssigkeit gewaschen wird;

Ablassen des gewaschenen Schlammes durch eine untere Ablaßöffnung an einer unteren Stelle der Waschkolonne und

Ablassen der verbrauchten Waschflüssigkeit durch eine obere Ablaßöffnung an einer oberen Stelle der Waschkolonne.

7. Verfahren nach Anspruch 6, bei dem der Schlamm mit einer Strömungsgeschwindigkeit von 0,1 m/s oder langsamer, gemessen an den Öffnungen der Schlammzuführdüsen, eingebracht wird.

8. Verfahren nach Anspruch 6, bei dem die Waschflüssigkeit mit einer Strömungsgeschwindigkeit von 0,2 m/s oder langsamer, gemessen an den Öffnungen der Waschflüssigkeitszuführungsdüsen, zugeführt wird.

9. Verfahren nach Anspruch 8, bei dem die Waschflüssigkeit mit einer Strömungsgeschwindigkeit von 0,05 m/s oder langsamer, gemessen an den Öffnungen der Waschflüssigkeitszuführungsdüsen, zugeführt wird.

**Revendications**

1. Tour de lavage à contre-courant, comprenant une tuyère de chargement de bouillie (4) qui débouche dans une partie supérieure de la tour, un organe de dispersion de bouillie (3), disposé au-dessous de la tuyère de chargement de bouillie et ayant une surface de projection vers le haut plus étendue que la surface de l'ouverture de la tuyère de chargement de bouillie et une forme de cône dont le sommet est dirigé vers la tuyère de chargement de bouillie, une section de fût (7) de la tour de lavage, cette section de fût étant disposée verticalement au-dessous de l'organe de dispersion de bouillie (3), une tuyère d'alimentation en liquide de lavage (8), disposée dans une partie d'extrémité inférieure de la section de fût (7) et présentant une multiplicité de petits orifices, une ouverture de vidange inférieure (6) formée à travers la paroi de la tour de lavage en un point du fond de celle-ci pour l'évacuation de bouillie lavée, et une ouverture de vidange supérieure (2) formée à travers la paroi de la tour de lavage en un point du haut de celle-ci pour l'évacuation de liquide de lavage consommé, caractérisée en ce que la surface en coupe transversale et horizontale de la section de fût (7) de la tour de lavage est plus petite que la différence entre la surface en coupe transversale et horizontal de la tour de lavage à l'endroit ou est disposé l'organe de dispersion de bouillie (3) et la surface de projection vers le haut de l'organe de dispersion de bouillie, et en ce que les orifices de la tuyère d'alimentation en liquide de lavage (8) sont formés dans une direction intermédiaire entre la direction horizontale et la direction vers le bas.

2. Tour de lavage à contre-courant selon la revendication 1, dans laquelle la tuyère de chargement de bouillie (4) est disposée de telle manière que son ouverture soit à distance vers le bas du haut de la tour de lavage, de façon a former une région de formation d'interface stable entre la bouillie et le liquide de lavage consommé dans la partie supérieure de la tour de lavage.

3. Tour de lavage à contre-courant selon la revendication 1, dans laquelle plusieurs fentes sont pratiquées à l'orifice de chaque tuyère d'alimentation en liquide de lavage (8).

4. Tour de lavage à contre-courant selon la revendication 1, dans laquelle une grille frittée, un morceau de tissu ou un tamis est appliqué à l'orifice de chaque tuyère d'alimentation en liquide de lavage (8).

5. Tour de lavage à contre-courant selon la revendication 1, dans laquelle les orifices des tuyères d'alimentation en liquide de lavage (8) sont situés au-dessus de l'ouverture de vidange inférieure (6) pour l'évacuation de bouillie lavée.

6. Procédé de lavage d'une bouillie de résine synthétique à contre-courant avec un liquide de lavage, comprenant les opérations consistant à charger, dans une tour de lavage à contre-courant selon l'une quelconque des revendications 1 à 5, la bouillie par la tuyère de chargement de bouillie à une vitesse d'écoulement de 0,5 m/s ou moins, mesurée au niveau de l'ouverture de la tuyère de chargement de bouillie, à introduire, dans la section de fût de la tour de lavage à contre-courant, le liquide de lavage issu des tuyères d'alimentation en liquide de lavage à une vitesse d'ecoulement telle que la formation de turbulence soit évitée dans la section de fût de la tour de lavage, de manière à former une interface stable entre la bouillie et le liquide de lavage consommé dans la partie supérieure de la tour de lavage, de telle sorte que la bouillie soit lavée à contre-courant par le liquide de lavage, à évacuer la bouillie lavée par une ouverture d'évacuation inférieure en un point inférieur de la tour de lavage, et à évacuer le liquide de lavage consommé par une ouverture de lavage supérieure en un point supérieur de la tour de lavage.

7. Procédé selon la revendication 6, dans lequel la bouillie est chargée à une vitesse d'écoulement de 0,1 m/s ou moins, mesurée au niveau des orifices des tuyères d'alimentation en bouillie.

8. Procédé selon la revendication 6, dans lequel le liquide de lavage est introduit à une vitesse d'écoulement de 0,2 m/s ou moins, mesurée au niveau des orifices des tuyères d'alimentation en liquide de lavage.

9. Procédé selon la revendication 8, dans lequel le liquide de lavage est introduit à une vitesse d'écoulement de 0,05 m/s ou moins, mesurée au niveau des orifices des tuyères d'alimentation en liquide de lavage.

# FIG.1

# FIG.2

# FIG.3

# FIG.4